# EUROPEAN PATENT APPLICATION

(11) **EP 4 762 900 A1**
(43) Date of publication of application: **24.06.2026**
(21) Application number: 25222078.5
(22) Date of filing: 10.12.2025
(51) Int. Cl.: A01C 15/00, G01F 23/292

(54) **PREDICTING RUNOUT TIMES FOR AGRICULTURAL MATERIAL IN A CONTAINER**

(30) Priority: 19.12.2024 US 202463736182 P
(71) Applicant: Precision Planting LLC, Tremont, IL 61568 (US)
(72) Inventor: Zietz, John Michael, Fargo (US); Young, Jaden, Fargo (US)
(74) Representative: AGCO Intellectual Property Department

(57) **Abstract**

A mechanism and method for determining a runout time for one or more sub-volumes of an interior volume (111) of a container (110) carrying pourable agricultural material (190). A distance determining system (120) is used to determine a distance to multiple points (121-125) on an exposed surface (191) of the agricultural material. A flow rate monitoring system (130) is used to determine one or more flow rates in different parts of the interior volume of the container. The determined flow rate(s) and the determined distance(s) are processed to predict or estimate the runout time(s) for the one or more sub-volumes.

## Description

### CROSS-REFERENCE TO RELATED APPLICATIONS

### FIELD

Embodiments of the present disclosure relate to the field of agriculture, and in particular to the prediction of runout times for agricultural material in a container.

### BACKGROUND

With ever-increasing population numbers and an ongoing interest in more environmentally friendly farming practices, there is a desire to improve agricultural practices. One important feature of agricultural practices is the storing of pourable agricultural material, i.e., material used for performing agricultural processes or produced by agricultural processes.

Examples of pourable agricultural materials include fluids (such as water, fertilizer, pesticides and so on) as well as solid material that can form heaps or piles (such as seed, grain, fruits, vegetables, crop, salt, livestock feed, compost and so on). Other examples will be readily apparent to the skilled person.

To aid in the performance of agricultural practices, it is useful to have information about an amount of time left before the pourable agricultural material has run out, also known as a runout time.

### BRIEF SUMMARY

In accordance with a proposed approach, there is provided an agricultural system comprising: a container having an interior volume for carrying pourable agricultural material, the container having one or more outlets through which the pourable agricultural material is able to flow out of the container, wherein any exposed interior surface of the container and an exposed surface of the pourable agricultural material together define a combined exposed surface; a distance determining system configured to determine, for each of a plurality of points on the combined exposed surface, a distance between the distance determining system and said point; a flow rate monitoring system configured to monitor a flow rate of the pourable agricultural material in each of one or more first sub-volumes of the interior volume of the container; and a runout time prediction system configured to process each determined distance and each determined flow rate to predict a runout time for each of one or more second sub-volumes of the interior volume, wherein a runout time is a length of time until a flow rate of the pourable agricultural material through the second sub-volume reaches or falls below a predetermined flow rate; and wherein a positional relationship between each of the plurality of points, each first sub-volume and each second sub-volume is known.

The present disclosure recognizes that it is possible to determine a runout time of different sub-volumes of a container through monitoring of a position of an exposed surface of the pourable agricultural material and the monitored flow rate(s) at one or more different sub-volume(s) of the pourable agricultural material. This provides a mechanism for accurate determination of the runout time(s).

In some embodiments, the one or more second sub-volumes of the pourable agricultural material comprises, for each outlet of the container, an outlet sub-volume bound by the outlet for the container. This configuration allows for targeted monitoring of material flow rate near each outlet, and facilitates predictions of runout times for a region in the vicinity of the outlet(s). In this way, a runout time of each outlet can be effectively determined.

In some embodiments, for each outlet sub-volume, a flow rate of the pourable agricultural material through said outlet sub-volume is a flow rate of pourable agricultural material out of the outlet bounding said outlet sub-volume. This approach provides valuable information for use in managing or controlling the dispensing of the pourable agricultural material.

In some embodiments, each of the plurality of points on the combined exposed surface lies in a different direction from the distance determining system.

In some embodiments, the distance determining system comprises a time of flight sensor. The use of time of flight technology allows for rapid, non-contact measurements of the position of an exposed surface of the pourable agricultural material within the container. This approach minimizes interference with the pourable agricultural material and provides real-time data updates.

In some embodiments, the time of flight sensor is an indirect time of flight sensor. Indirect time of flight sensing offers enhanced accuracy and reliability in measuring distances within the container, with reduced sensitivity to noise and/or multipath effects.

In some embodiments, the runout time prediction system is configured to: receive shape information defining a shape of the interior volume of the container; and process the shape information, each determined distance and each determined flow rate to predict the runout time for each of the one or more second sub-volumes. This approach facilitates the modelling of material flow within the container to predict the runout time(s), for improved accuracy in produced the runout time(s), e.g., by facilitating more accurate prediction of the volume of pourable agricultural material to flow through the outlet(s).

In some embodiments, the runout time prediction system is configured to: process the shape information and each determined distance to predict a shape of the pourable agricultural material; and process the predicted shape of the pourable agricultural material and each determined flow rate to predict the runout time for each of the one or more second sub-volumes.

This two-step prediction process aims to model of the shape of the pourable agricultural material within the container. This improves the capacity and ability of the runout time prediction system to anticipate and predict flow behavior and thereby provide more accurate runout time estimates.

In some embodiments, the pourable agricultural material comprises a plurality of distinct and separable solid elements and the runout time prediction system is configured to use a granular dynamics technique to process the predicted shape of the pourable agricultural material and each determined flow rate to predict the runout time for each of the one or more sub-volumes.

The incorporation of granular dynamics techniques enables the system to account or model for the unique flow characteristics of particulate pourable agricultural materials. This improves prediction accuracy for separable (solid) materials like seeds or grains.

In some embodiments, the flow rate monitoring system is configured to process the distances determined by the distance determining system over time to monitor the flow rate of the pourable agricultural material through each sub-volume of the interior volume of the container.

By leveraging the distance data to calculate flow rates, the system eliminates the need for any additional or separate flow sensors. This integrated approach simplifies the system architecture while providing comprehensive flow monitoring capabilities throughout the container.

In some embodiments, the one or more outlets comprises a plurality of outlets. It has been recognized that the herein proposed approaches can be employed even when the container comprises a plurality of outlets. As such, the proposed mechanism facilitates the monitoring of the runout time for one or more sub-volumes of containers containing more than one outlet.

In some embodiments, the pourable agricultural material comprises a plurality of distinct and separable solid elements, such as seed or grain.

In some embodiments, the value of the predetermined flow rate is 0. Setting the predetermined flow rate to zero allows the system to predict a time until a complete emptying of the specific sub-volumes. This feature is particularly useful for scheduling refills or maintenance, ensuring continuous operation in agricultural processes.

In accordance with another proposed approach, there is provided a method comprising: carrying pourable agricultural material in a container having an interior volume, the container having one or more outlets through which the pourable agricultural material is able to flow out of the container, wherein an exposed interior surface of the container and an exposed surface of the pourable agricultural material together define a combined exposed surface; determining using a distance determining system, for each of a plurality of points on the combined exposed surface, a distance between the distance determining system and said point; monitoring, using a flow rate monitoring system, flow rate of the pourable agricultural material in each of one or more first sub-volumes of the interior volume of the container; and processing, using a runout time prediction system, each determined distance and each determined flow rate to predict a runout time for each of one or more second sub-volumes of the interior volume, wherein a runout time is a length of time until a flow rate of the pourable agricultural material through the second sub-volume reaches or falls below a predetermined flow rate, and wherein a positional relationship between each of the plurality of points, each first sub-volume and each second sub-volume is known.

Other technical features may be readily apparent to one skilled in the art from the following figures, descriptions, and claims.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

One or more embodiments of the disclosure will now be described, by way of example only, with reference to the accompanying drawings, in which:
FIG. 1 illustrates a proposed agricultural system;
FIG. 2 illustrates another proposed agricultural system;
FIG. 3 illustrate yet another proposed agricultural system;
FIG. 4 illustrates optional elements of an agricultural system; and
FIG. 5 is a flowchart illustrating a proposed method.

### DETAILED DESCRIPTION

It should be understood that the detailed description and specific examples, while indicating exemplary embodiments of the apparatus, systems and methods, are intended for purposes of illustration only and are not intended to limit the scope of the disclosure. These and other features, aspects, and advantages of the apparatus, systems and methods of the present disclosure will become better understood from the following description, appended claims, and accompanying drawings. It should be understood that the Figures are merely schematic and are not drawn to scale. It should also be understood that the same reference numerals are used throughout the Figures to indicate the same or similar parts.

The following description provides specific details of embodiments. However, a person of ordinary skill in the art will understand that the embodiments of the disclosure may be practiced without employing many such specific details. Indeed, the embodiments of the disclosure may be practiced in conjunction with conventional techniques employed in the industry. In addition, the description provided below does not include all the elements that form a complete structure or assembly. Only those process acts and structures necessary to understand the embodiments of the disclosure are described in detail below. Additional conventional acts and structures may be used.

As used herein, the terms "comprising," "including," "containing," "characterized by," and grammatical equivalents thereof are inclusive or open-ended terms that do not exclude additional, unrecited elements or method steps, but also include the more restrictive terms "consisting of" and "consisting essentially of" and grammatical equivalents thereof.

As used herein, the singular forms following "a," "an," and "the" are intended to include the plural forms as well, unless the context clearly indicates otherwise.

As used herein, the term "may" with respect to a material, structure, feature, or method act indicates that such is contemplated for use in implementation of an embodiment of the disclosure, and such term is used in preference to the more restrictive term "is" so as to avoid any implication that other compatible materials, structures, features, and methods usable in combination therewith should or must be excluded.

As used herein, the term "configured" refers to a size, shape, material composition, and arrangement of one or more of at least one structure and at least one apparatus facilitating operation of one or more of the structure and the apparatus in a predetermined way.

As used herein, any relational term, such as "first," "second," "top," "bottom," "upper," "lower," "above," "beneath," "side," "outer," "inner," etc., is used for clarity and convenience in understanding the disclosure and accompanying drawings, and does not connote or depend on any specific preference or order, except where the context clearly indicates otherwise. For example, these terms may refer to an orientation of elements as illustrated in the drawings. Additionally, these terms may refer to an orientation of elements of the disclosure when utilized in a conventional manners.

As used herein, the term "substantially" in reference to a given parameter, property, or condition means and includes to a degree that one skilled in the art would understand that the given parameter, property, or condition is met with a small degree of variance, such as within acceptable manufacturing tolerances. By way of example, depending on the particular parameter, property, or condition that is substantially met, the parameter, property, or condition may be at least 90.0% met, at least 95.0% met, at least 99.0% met, or even at least 99.9% met.

As used herein, the term "about" used in reference to a given parameter is inclusive of the stated value and has the meaning dictated by the context (e.g., it includes the degree of error associated with measurement of the given parameter, as well as variations resulting from manufacturing tolerances, etc.).

As used herein, the term "and/or" includes any and all combinations of one or more of the associated listed items.

This disclosure relates to a mechanism for determining a runout time for one or more sub-volumes carried in an interior volume of a container carrying pourable agricultural material. A distance determining system is used to determine a distance to multiple points on an exposed surface of the agricultural material. A flow rate monitoring system is used to determine one or more flow rates in different parts of the interior volume of the container. The determined flow rate(s) and the determined distance(s) are processed to predict or estimate the runout time(s) for the one or more sub-volumes.

In the context of the present disclosure, a runout time identifies a length of time until a flow rate of the pourable agricultural material through a relevant sub-volume reaches or falls below a predetermined flow rate (e.g., reaches or approaches 0).

The runout time may be expressed as a measure of how much time is left before the flow rate reaches or falls below the predetermined flow rate. For example, the runout time may be represented in units of time such as seconds, minutes, or hours. This representation provides a direct indication of the remaining operational time before the pourable agricultural material is depleted from a particular sub-volume.

In other aspects, the runout time may be expressed as an estimated future point in time. For instance, the runout time may be represented as a timestamp indicating when the flow rate is expected to reach or fall below the predetermined flow rate. This representation may be useful for scheduling purposes, allowing operators to plan refilling or maintenance activities based on specific times.

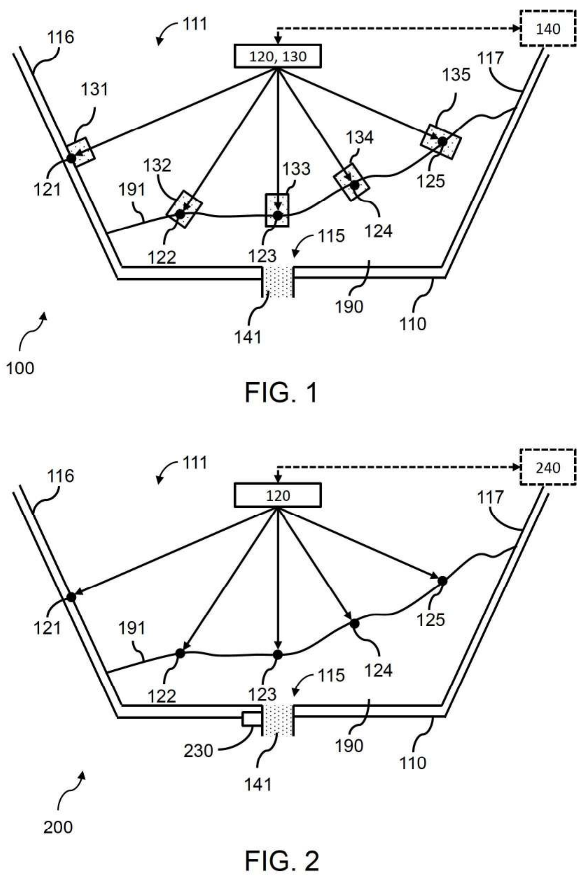

FIG. 1 illustrates a proposed agricultural system 100, which comprises a container 110, a distance determining system 120, a flow rate monitoring system and a runout time prediction system.

The container 110 has an interior volume 111 for carrying pourable agricultural material 190. The skilled person will readily appreciate how the container may comprise one or more walls and/or a base for defining the interior volume 111.

In the context of the present disclosure, pourable agricultural material 190 refers to any pourable agricultural material or substrate that is able to flow from a/the container. Thus, the term pourable agricultural material refers to both fluid/liquid pourable agricultural material (e.g., water, pesticides, liquid nutrients) as well as granular or particulate materials (e.g., seeds, grains, pelletized fertilizers, pelletized pesticides and so on).

The container 110 has one or more outlets 115 (in the illustrated example: a single outlet 115) through which the pourable agricultural material is able to flow out of the container.

The flow of pourable agricultural material through the outlet(s) may be controllable by adjusting one or more flow control mechanisms (not illustrated in FIG. 1) associated with the outlet(s). In some examples, the flow control mechanisms may include one or more valves, gates, or other adjustable openings that can regulate the rate at which the pourable agricultural material exits the container.

The exposed interior surface 116, 117 of the container 111 and the exposed surface 191 of the pourable agricultural material 190 together define a combined exposed surface. Conceptually, the exposed interior surface 116, 117 includes any part of the container's inner walls or base that is not covered by the pourable agricultural material, while the exposed surface 191 of the pourable agricultural material is the top layer or uppermost portion of the material that is visible from above. In this way, the combined exposed surface may effectively represent the visible area within the container (when observed from above).

The distance determining system 120 is configured to determine, for each of a plurality of points 121, 122, 123, 124, 125 on the combined exposed surface 116, 117, 191, a distance between the distance determining system and said point.

The distance determining system 120 may, for instance, comprise a time-of-flight sensor. Suitable examples are well known in the art, such as laser-based time-of-flight systems or ultrasonic-based time-of-flight systems. In preferred examples, if used, the time of flight sensor is an indirect time of flight sensor, such as a phase-based time of flight sensor.

As another example, the distance determining system may comprise a 3D scanner, such as a structured light 3D scanner that projects a known pattern of light onto the combined exposed surface and uses one or more cameras to capture and analyze how the pattern is distorted, enabling the distance determining system to calculate distances to a plurality of different points. These determined distances may, for instance, be usable for creating or deriving a 3D model of the combined surface (e.g., of the exposed interior space).

In the illustrated example, each of the plurality of points on the combined exposed surface lies in a different direction from the distance determining system. This allows for tracking of different points of the exposed surface across a range of directions, and provides for a more compact distance determining system.

However, this is not essential. In other examples, the distance determining system is configured such that two or more of the plurality of points lies in parallel directions from the distance determining system. For instance, the distance determining system may comprise multiple sensors or scanning units positioned at different locations within or around the container 110, allowing for parallel measurements of points along similar directions. This configuration may function to increase the accuracy and resolution of the distance determination process.

It will be appreciated that the location of the points for which a distance is measured will change as the total volume of the pourable agricultural material changes, as this will naturally result in a change in shape of the combined exposed surface 191, 116, 117.

The flow rate monitoring system 130 is configured to monitor a flow rate of the pourable agricultural material in each of one or more first sub-volumes of the interior volume of the container.

In the illustrated example, the flow rate monitoring system 130 is integrated with the distance determining system 120. In particular, the flow rate monitoring system uses the distances determined by the distance determining system to monitor the flow rate in each first sub-volume.

By way of explanation, in the illustrated example, each first sub-volume is associated with a different point. In particular, each sub-volume a respective sub-volume of the interior volume of the container that extends from the distance determining system in a direction towards (and beyond) the point associated with the first sub-volume. In this way, each first sub-volume conceptually forms a virtual column or sector within the container, originating from the distance determining system and extending through the associated point on the combined exposed surface.

The flow rate monitoring system 130 is thereby able to track changes in the pourable agricultural material's level or distribution within each of these sub-volumes over time. By associating each sub-volume with a specific point on the combined exposed surface, the system can correlate the distance measurements from the distance determining system 120 with the corresponding flow rate for that particular region of the container. Specifically, changes in the distance measured by the distance determining system (for a particular segment/column) over time indicate changes in the flow rate.

Another example of a flow rate monitoring system comprises one or more dedicated flow rate monitors positioned within the interior volume of the container. These flow rate monitors may monitor the flow rate at different positions (and therefore sub-volumes) within the interior volume of the container. Example flow rate monitors include differential pressure flow meters, positive displacement flow meters, mass flow meters, optical flow meters, impact flow meters, and so on.

Another example of a flow rate monitoring system is provided later in this disclosure.

The runout time prediction system 140 is configured to process each determined distance and each determined flow rate to predict a runout time for each of one or more second sub-volumes 141 of the interior volume. In the illustrated example, the second sub-volume(s) comprises a single sub-volume at the outlet 115 of the container 110. Thus the second sub-volume(s) comprises a single outlet sub-volume bound by the outlet 115 of the container 111.

In this way, the runout time effectively represents a runout time for the outlet 115 of the container 111. In particular, a flow rate of the pourable agricultural material through said outlet sub-volume is a flow rate of pourable agricultural material out of the outlet bounding said outlet sub-volume.

In the context of this embodiment, the runout time is a length of time until a flow rate of the pourable agricultural material through the second sub-volume 141 reaches or falls below a predetermined flow rate, e.g., zero (0).

To facilitate determination of the runout time, it will be appreciated that a positional relationship between each of the plurality of points, each first sub-volume and the/each second sub-volume is known. For the illustrated embodiment, this can be readily achieved by the second sub-volume being associated with the outlet 115, and the distance determining system having a known positional relationship with the outlet 115.

By exploiting these known positional relationships, the runout time prediction system is able to effectively map the container's interior space and track changes in the pourable agricultural material's distribution. More particularly, this spatial awareness enables the runout time prediction system to accurately process the determined distances and flow rates, taking into account how material movement in different parts of the container will ultimately affect the flow through the second sub-volume (i.e., the outlet).

One approach that may be employed by the runout time prediction system 140 is hereafter described. This approach involves using the determined distances and flow rates to the quantity pourable agricultural material within the container, and predict its flow behavior through the outlet.

In particular, it is recognized that the distances determined by the distance determining system 120 for each point on the combined exposed surface may effectively define the three-dimensional distribution of the (exposed surface of the) pourable material within the container. Since the positional relationship between these points and the second sub-volume (e.g., the outlet area) is known, the runout time prediction system may exploit the determined distance(s) to estimate the quantity of pourable material that is available to flow into the second sub-volume.

Thus, the runout time prediction system may process the determined distance(s), to each point, to estimate an amount or quantity of pourable agricultural material that is able to flow through the second sub-volume.

This estimation process may take into account the shape and size of the interior volume 111 of the container 110. Thus, the runout time prediction system may receive shape information defining a shape of the interior volume of the container; and process the shape information, each determined distance and each determined flow rate to predict the runout time for each of the one or more second sub-volumes.

The shape information may, for instance, comprise an interior volume digital model that defines the shape of the interior volume of the container. The interior volume digital model may define a model space. The size and shape of the interior volume (e.g., as represented by the digital model) may be used to constrain the overall size and shape of the pourable agricultural material.

In particular, the runout time prediction system may be configured to process the shape information (e.g., the interior volume digital model) and each determined distance to predict a shape of the pourable agricultural material. This shape of the pourable agricultural material may be represented in the form of material model, e.g., in the same model space as the digital model.

The runout time prediction system may then process the predicted shape of the pourable agricultural material (e.g., the material model) and each determined flow rate to predict the runout time for each of the one or more second sub-volumes.

In more detail and as a working example, if there is a known positional relationship between the distance determining system and the interior volume of the container and the shape and size of the interior volume is known, then the distances can be processed to estimate a shape and size of the pourable agricultural material. In particular, the distances may be used to define an exposed surface digital model within the same model space as the interior volume digital model, where ethe exposed surface digital model represents the exposed surface 191 of the pourable agricultural material within the container 110. The exposed surface digital model and the interior volume digital model can be processed to identify a volume of the pourable agricultural material, e.g., by determining a material model (in the model space) that is bounds by the exposed surface digital model and the interior volume digital model. The quantity or volume of pourable agricultural material is derivable from the material model.

The estimation process may also take into account the position of the second sub-volume in relation to the rest of the container and a predetermined maximum angle of repose for the pourable agricultural material. This angle represents the steepest stable slope for the material and helps determine how the material will settle and flow within the container.

In particular, the position of the second sub-volume may be defined in the model space. The angle of repose may be used to modify the material model to exclude parts representing material that lie below the angle of repose with respect to the position of the second sub-volume. The material model can thereby be modified to represent material that is available to flow to the second sub-volume. The material model can be processed to derive or estimate the amount of pourable agricultural material that is able to flow through the second sub-volume.

In one example, this estimation can be performed using a simple extrapolation technique, in which the observed flow rates through the first sub-volumes are extrapolated to predict a flow rate through the second sub-volume.

The extrapolation may take into account factors such as the relative positions of the first sub-volumes to the second sub-volume and/or the overall shape of the container. For instance, if the flow rates in the first sub-volumes closer to the outlet are observed to be higher than those further away, the extrapolation might weight these closer measurements more heavily in predicting the outlet flow rate. Similarly, if there's a consistent gradient in flow rates across the container, this gradient could be extended to estimate the flow at the outlet.

In another example, the estimation is performed by averaging the monitored flow rates across all first sub-volumes to produce the estimate of the flow rate through the second sub-volume. For a single outlet, it can be assumed that all of the pourable agricultural material flows out through the outlet, such that the average flow rate across the first sub-volumes provides a suitable estimate of the flow rate through the second sub-volume.

In more complex examples, the runout prediction system may use the predicted shape of the pourable agricultural material (e.g., the material model) and each determined flow rate monitored by the flow rate monitoring system 130 (i.e., for each of the first sub-volumes) to estimate the overall flow rate through the second sub-volume.

By way of example, the estimation may be performed using one or more flow-based modeling techniques. Such techniques may take into account the shape of the interior volume, the properties of the pourable material, and the positional relationships between the monitored points, first sub-volumes, and the outlet to predict the flow rate through the second sub-volume.

One potential flow-based modelling technique is the Discrete Element Method (DEM), which models the pourable agricultural material as discrete particles with properties like size, shape, mass, and friction coefficients. Thus, a DEM is a granular dynamics technique. The container interior may be represented as boundary conditions, with initial particle distribution based on measured distances. Forces acting on particles, including gravity and friction, may be calculated at each time step. Particle motion may then be updated using Newton's laws. The flow rate through the second sub-volume may be determined by counting particles passing through over time. This DEM simulation may be run iteratively, updating particle positions and flow rates. By accounting for complex particle interactions, DEM may provide more accurate predictions than simpler methods, especially for materials with complex flow behaviors or irregularly shaped containers.

The monitored flow rates for the first sub-volumes may be used to calibrate the DEM simulation to improve the accuracy of the simulation. For instance, the simulation may compare the predicted flow rates for each first sub-volume to the actual monitored flow rates. Any discrepancies may be used to adjust simulation parameters.

Another flow-based modelling technique that may be employed is the Finite Element Method (FEM), in which the interior volume of the container and the pourable agricultural material are effectively defined as a mesh of interconnected elements. Each element may be associated with one or more properties that represent the characteristics of the material, such as density, viscosity, and/or yield stress. The FEM simulation may model the flow of the pourable agricultural material as a continuous medium using these properties, potentially taking into account factors such as gravity, pressure gradients, and boundary conditions defined or set by the container walls and outlet. By way of example, the FEM simulation may aim to solve partial differential equations that represent the fluid dynamics (e.g., the Navier-Stokes equations) for each element in the mesh to model or predict the motion of the pourable agricultural material over time. The FEM simulation may calculate the velocity field of the pourable agricultural material throughout the interior volume container, which indicates flow rates through different sub-volumes such as the second sub-volumes associated with the outlets.

In a similar manner to the DEM simulation, the monitored flow rates for the first sub-volumes may be used to calibrate the FEM simulation to improve the accuracy of the simulation. For instance, the FEM simulation may compare the predicted flow rates for each first sub-volume (produced by the simulation and represented in the velocity field) to the actual monitored flow rates. Any discrepancies may be used to adjust simulation parameters.

Other suitable examples of flow-based modelling techniques will be apparent to the skilled person, such as cellular automata models, smoothed particle hydrodynamics methods, computational fluid dynamics (CFD) techniques, and/or lattice Boltzmann methods. Further examples are provided by Pöschel, Thorsten, and Thomas Schwager. Computational granular dynamics: models and algorithms. Springer Science & Business Media, 2005.

The choice of flow-based modelling technique to employ may be at least partly dependent upon a material type of the pourable agricultural material.

For instance, when the pourable agricultural material comprises a plurality of distinct and separable solid elements, the runout time prediction system may be configured to use a granular dynamics technique (e.g., to process the predicted shape of the pourable agricultural material and each determined flow rate) to predict the runout time for each of the one or more sub-volumes. The DEM approach outlined above is one example of a suitable granular dynamics technique, although other examples will be known to the skilled person - such as the cellular automata models, or smoothed particle hydrodynamics methods. Further examples are provided by Pöschel, Thorsten, and Thomas Schwager. Computational granular dynamics: models and algorithms. Springer Science & Business Media, 2005.

As another example, when the pourable agricultural material comprises fluid (e.g., liquid), the runout time prediction system may be configured to use a fluid dynamics technique (e.g., to process the predicted shape of the pourable agricultural material and each determined flow rate) to predict the runout time for each of the one or more sub-volumes. The FEM approach outlined above is one example of a suitable fluid dynamics technique, although other examples will be known to the skilled person - such as computational fluid dynamics (CFD) techniques, and/or lattice Boltzmann methods.

Once the runout time prediction system has estimated both the quantity of pourable material available to flow through the second sub-volume and the predicted flow rate through that sub-volume, it may process these two pieces of information to calculate the runout time. This can be trivially performed, for instance, by dividing the estimated quantity of material by the predicted flow rate, yielding the time it will take for the available material (for flowing through the second sub-volume) to be depleted from the container through the outlet.

The components of the proposed agricultural system 100 may be readily adapted to provide a container with a plurality of outlets (rather than a single outlet, as illustrated in FIG. 1). In particular, for such an agricultural system, the one or more second sub-volumes may comprise a respective sub-volume for each outlet, i.e., a respective outlet sub-volume each of which is bound by a respective outlet for the container.

In such an embodiment, the runout time prediction system 140 may be appropriately adapted for predicting the runout time for each outlet (i.e., each sub-volume associated with the outlet(s)).

In particular, the runout time prediction system 140 may use one or more flow-based modelling techniques, such as the DEM or FEM techniques previously outlined, to model the pourable agricultural material and its flow rate through each outlet (and therefore each second sub-volume) over time. The flow rate through each first sub-volume is usable for calibrating the flow-based modelling technique, e.g., as previously exemplified.

The use of such flow-based modelling techniques allows for precise runout time estimation for each outlet, specifically accounting for potential variations in flow rates and material depletion across different parts of the container.

Similarly, although in the above described embodiment(s) each second sub-volume is an outlet sub-volume each bound by a respective outlet, similar approaches can be exploited to determine a runout time for different second sub-volumes of the interior volume. In particular, the flow-based modelling techniques (e.g., DEM or FEM) can be used to estimate a runout time for such other sub-volumes.

By way of example, there may be an interest in predicting when a specific region of the container will be depleted, even if not directly associated with an outlet. This could be useful in scenarios where, for instance, knowledge on where to refill the pourable agricultural material is desirable.

To accommodate other second sub-volumes (not associated with any outlet(s)), the runout time prediction system may be configured to define and track these additional sub-volumes. The same principles as previously outlined may be employed.

By way of working example, the interior volume may be divided into a grid of second sub-volumes, each with its own predicted runout time. This would provide a detailed map or detailed information of how the pourable agricultural material is expected to deplete across different areas of the container over time. This may be useful for exploitation of material usage, planning refill schedules, or identifying potential flow issues within the container.

FIG. 2 illustrates an alternative proposed agricultural system 200, which comprises a container 110, a distance determining system 120, a flow rate monitoring system 230 and a runout time prediction system 240.

The agricultural system 200 differs from the previously disclosed agricultural system 200 in that the flow rate monitoring system is configured to monitor a flow rate through the outlet 115 of the container. As such, the first sub-volume(s) and the second sub-volume(s) comprises a same sub-volume, namely an outlet sub-volume 241 that is bound by the outlet 115 of the container 110.

Thus, the flow rate monitoring system 230 may comprise a respective flow rate monitor for each outlet 115 of the container 110. In the illustrated example, the flow rate monitoring system comprises a flow rate monitor for the single outlet of the container.

Suitable examples of flow rate monitors, also known as flow meters, will be apparent to the skilled person. By way of non-exhaustive example, suitable flow rate monitors include differential pressure flow meters, positive displacement flow meters, mass flow meters, optical flow meters, impact flow meters, and so on.

This use of a flow rate monitor for each second sub-volume allows the runout time prediction system 240 to make use of simpler processes to predict the runout time for the outlet sub-volume, thereby using less processing resource and/or power.

In particular, by directly measuring the flow rate of the second sub-volume, any need to calculate the flow rate through the second sub-volume is omitted. Any previously disclosed approach for determining the runout time rate can be used, employing the calculated flow rate through the second sub-volume(s) rather than the estimated flow rate. Another approach is described later in this disclosure.

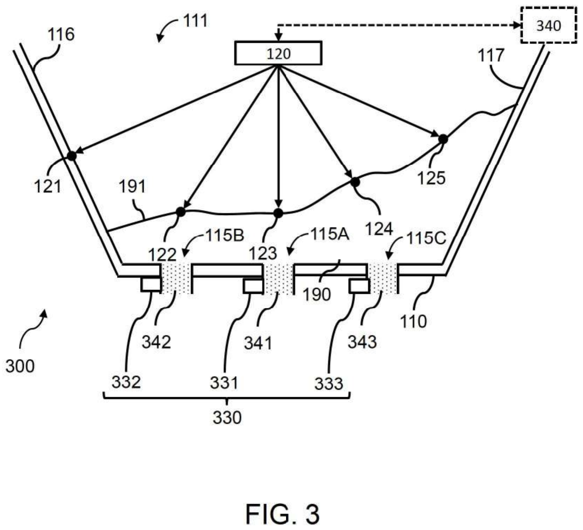

FIG. 3 illustrates another proposed agricultural system 300, which comprises a container 110, a distance determining system 120, a flow rate monitoring system 330 and a runout time prediction system 340.

The proposed agricultural system differs from the previously disclosed agricultural system primarily in that the container 110 comprises a plurality of outlets 115A, 115B, 115C. Of course, it will be appreciated that this may necessitate a modification to the flow rate monitoring system 230 and the runout time prediction system.

In this approach, the flow rate monitoring system 330 is configured to monitor a flow rate through each outlet 115A, 115B, 115C of the container. In particular, the first sub-volumes and the second sub-volumes comprises the same sub-volumes, namely outlet sub-volumes 341, 342, 343, each of which is bound by a respective outlet 115A, 115B, 115C of the container 110.

The flow rate monitoring system 330 may comprise a respective flow rate monitor 331, 332, 333 for each outlet 115A, 115B, 115C of the container 110. Suitable examples have been previously disclosed.

A technique that may be employed by the runout time prediction system 240, 340 of the agricultural system 200, 300 (FIG. 2 and FIG. 3) to calculate the runout time for each second sub-volume is hereafter described. This approach takes the form of a simplified DEM-like simulation.

In this approach, the simulation may make use of the material model that represents the entirety of the pourable agricultural material in the interior volume. This can be produced using a previously disclosed method.

The material may may be used to identify a (total) volume of the pourable agricultural material that is directly above each outlet. In particular, the relative position of each outlet (in the model space) may be defined and used to identify a volume of the pourable material that is directly above each outlet.

In a first pass of the simulation, for each outlet, the associated volume may be iteratively reduced in a succession of time steps having a fixed length using the outlet's flow rate (and the fixed length of each time step) until the volume directly above one of the outlets is depleted. The total volume reduction of the pourable agricultural material resulting from this iterative reduction may then be used to modify the material model to represent a predicted shape/size/distribution of the pourable agricultural material when said total volume reduction has taken place.

For instance, a repose angle may be calculated based on the total remaining volume of the pourable agricultural material. This repose angle represents the steepest stable slope that the pourable agricultural material can maintain without sliding or collapsing, and may be definable further based on the relevant properties of the material and/or environment.

The repose angle may be used to simulate, by modification of the material model, a redistribution of the remaining material. This redistribution process involves adjusting the material model to reflect how the material represented by the material model would naturally settle under the influence of gravity and its own physical properties. In particular, the calculated repose angle may represent a boundary condition for the material model. In this way, the modification to the material model can accurately represent how the material would flow and redistribute itself within the container after a portion has been depleted through an outlet.

This process of subtracting the material from the volume(s) directly above the outlet(s) and modifying the material model may be repeated until no more material can be redistributed above an outlet. The simulated time to perform these iterations (calculatable based on the number of fixed time steps that have elapsed) may define the runout time for the outlet. If desired, this simulation may continue for subsequent outlet (if present).

The skilled person will appreciate that any herein disclosed agricultural system may comprise an agricultural vehicle, e.g., carrying the container. The agricultural vehicle may be configured to perform an agricultural task using the pourable agricultural material carried by the container.

By way of example, the agricultural vehicle may be a seed planter. In this context, the container may carry seed (for planting), such that the pourable agricultural material comprises seed. The runout time predictions for a seed planter may prove especially useful for large-scale farming operations. By accurately predicting when seed supplies will be depleted, an operator of the agricultural vehicle is able to plan refilling stops strategically, minimizing downtime and maximizing the area planted in a given timeframe.

As another example, the agricultural vehicle may be a fertilizer spreader. In this context, the container may carry fertilizer, such that the pourable agricultural material comprises granular or liquid fertilizer. In a fertilizer spreader configuration, the outlets of the container in a fertilizer spreader may be connected to one or more distribution mechanisms such as spinning discs or boom sprayers. The runout time prediction system is useful in such a context to help farmers perform their fertilizer application tasks to ensure appropriate coverage of fields without running out of fertilizer mid-application.

As yet another example, the agricultural vehicle may be a sprayer for applying liquid agricultural products such as pesticides, herbicides, or liquid fertilizers. In this case, the container may carry the liquid product, such that the pourable agricultural material comprises the liquid agricultural product. The runout time prediction system may be valuable for sprayer applications, as it provides useful information to aid an operator in regulating their spray patterns and/or application rates while ensuring continuous coverage across fields.

Of course, in other examples, the agricultural system may be adapted for use in stationary agricultural operations. For example, it may be employed in grain storage and processing facilities, where predicting the runout times for different types of grains or seeds from various storage bins can optimize the flow of materials through processing and packaging lines. In such contexts, the container may be a large storage silo or bin, and the outlets may be connected to conveyor systems or processing equipment.

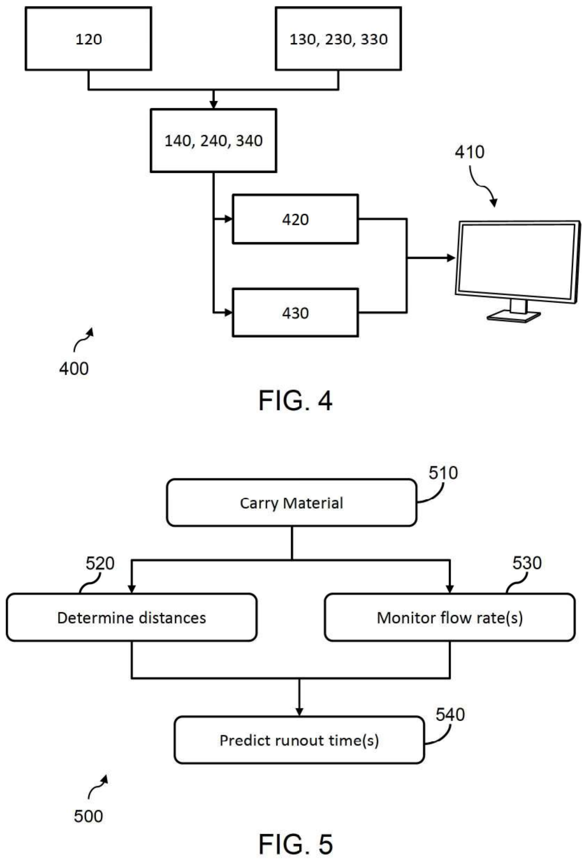

FIG. 4 schematically illustrates an agricultural system 400, comprising a container (not illustrated), the distance determining system 120, the flow rate monitoring system 130, 230, 330 and the runout time prediction system 140, 240, 340, which may be embodied as previously disclosed.

The agricultural system 400 may further comprise one or more optional elements that are here after detailed.

The agricultural system may further comprise a user interface 410. The user interface 410 may be controllable to provide one or more user-perceptiple outputs responsive to the predicted runout time(s) produced by the runout time prediction system 140, 240, 340.

In some examples, the agricultural system comprises an interface control module 420 configured to receive the predicted runout time(s) from the runout time prediction system 140, 240, 340 and control the user interface 410 to provide a user-perceptible output of at least one predicted runout time. This allows an operator of the agricultural system to operators to plan and/or co-ordinate their activities accordingly.

For instance, the user interface 410 may comprise a screen or display panel (which may be provided or mounted in agricultural equipment or a mobile device), and the interface control module 420 may be configured to control the user interface to provide a visual representation of at least one predicted runout time.

As another example, the user interface may comprise an audio output device (e.g., a speaker), and the interface control module may be configured to control the user interface to provide an audible representation of each runout time.

In some examples, the agricultural system further comprises an alert system 430. The alert system 430 is configured to control the generation of one or more alerts responsive to the predicted runout times. For example, when the runout time for a particular outlet or sub-volume reaches or approaches a predetermined threshold (e.g., 10 minutes remaining), the alert system 430 may trigger a visual or auditory alert, e.g., at the user interface 110.

In some examples, the alert system 430 may be configured to set different thresholds to provide different levels of alert. This multi-tiered approach may allow for more nuanced and proactive management of the agricultural system.

In some cases, the alert system may allow for customization of any threshold based on factors such as the type of pourable agricultural material, the agricultural task for which the material is to be used, or operator preferences.

The alert system 430 may be configured to provide different types of alerts (e.g., having different or otherwise user-distinguishable characteristics) for different second sub-volumes or, if relevant, associated outlets within the container. For example, it may use distinct visual or auditory cues to indicate which specific sub-volume or outlet is approaching its runout time.

A wide variety of other uses for the predicted runout time(s) will be readily apparent to the skilled person.

By way of example, where the agricultural system comprises an autonomous or semi-autonomous agricultural vehicle, the predicted runout time(s) may be integrated into the decision-making processes of a control system of the vehicle(s). For instance, an autonomous agricultural vehicle may use the runout time information to automatically adjust its speed or route to ensure continuous operation until a convenient refill point is reached.

As another example, where the agricultural system comprises a controllable dispensing system (which controls the flow rate of pourable agricultural material through the outlets), the controllable dispensing system may control the flow rate(s) of pourable agricultural material response to the predicted runout time(s), e.g., to ration the dispensing of the pourable agricultural material throughout the performance of an agricultural task. For instance, if it is known that an agricultural task of spraying a field will take X minutes (e.g., due to a known route and speed of the agricultural vehicle to complete the task), then the flow rate of the pourable agricultural material may be controlled to maintain a consistent application rate throughout the task duration. This may involve adjusting the flow rate based on the predicted runout time to ensure that the pourable agricultural material lasts for the entire duration of the task.

As yet another example, the agricultural system may be configured to log or store the predicted runout time(s) for later analysis. Thus, the agricultural system may comprise a storage unit configured to store the predicted runout time(s).

Proposed embodiments are particularly advantageous when the pourable agricultural material comprises a plurality of distinct and separable solid elements. In particular, the pourable agricultural material comprises seed or grain.

For the sake of completeness, FIG. 5 is a flowchart illustrating a proposed method 500.

The method 500 comprises carrying 510 pourable agricultural material in a container having an interior volume. The container has one or more outlets through which the pourable agricultural material is able to flow out of the container. An exposed interior surface of the container and an exposed surface of the pourable agricultural material together define a combined exposed surface.

The method 500 also comprises determining 520 using a distance determining system, for each of a plurality of points on the combined exposed surface, a distance between the distance determining system and said point. Suitable examples of distance determining systems and mechanisms for determining the distance(s) have been previously disclosed.

The method 500 also comprises monitoring 530, using a flow rate monitoring system, flow rate of the pourable agricultural material in each of one or more first sub-volumes of the interior volume of the container. Suitable flow rate monitoring systems and corresponding approaches for performing the monitoring have been previously disclosed.

The method 500 also comprises processing 540, using a runout time prediction system, each determined distance and each determined flow rate to predict a runout time for each of one or more second sub-volumes of the interior volume. A runout time is a length of time until a flow rate of the pourable agricultural material through the second sub-volume reaches or falls below a predetermined flow rate. Approaches for predicting the runout time(s) have been previously disclosed.

For the purposes of method 500, a positional relationship between each of the plurality of points, each first sub-volume and each second sub-volume is known.

The skilled person would be readily capable of modifying method 500 to perform the functionality of any herein disclosed agricultural system.

The skilled person will appreciate that one or more of the (sub-)systems of any herein proposed agricultural system are configured to process information or data to perform the desired functionality. For instance, the runout time prediction system is configured to process data received from the flow rate monitoring system and the distance determining system. Similarly, the flow rate monitoring system and the distance determining system may process data (e.g., generated by sensors) to produce the relevant data for the runout time prediction system.

To perform the processing of data, the relevant (sub-)systems may each comprise a processing module. Where relevant, the processing module(s) may be independent processors or form different (virtual) portions or parts of a same processing system comprising at least one processor.

Accordingly, in some examples, the agricultural system comprises at least one processor and at least one memory carrying instructions that, when executed, cause the at least one processor to perform at least some of the desired functionality of the proposed agricultural system (e.g., data processing functionality).

Each processor may be embodied as, for instance, one or more pieces of general-purpose and/or fixed function circuitry, such as a general-purpose microprocessor (e.g., a CPU), a field-programmable gate array (FPGA), an appropriately configured application-specific integrated circuit (ASIC), and/or a distributed processing arrangement (e.g., comprising multiple interconnected processing units working in parallel).

It will be understood that disclosed methods are preferably computerimplemented methods. As such, there is also proposed the concept of a computer program comprising code means for implementing any described method when said program is run on at least one processor, such as a computer. Thus, different portions, lines or blocks of code of a computer program according to an embodiment may be executed by at least one processor (of an agricultural system) to perform any herein described method.

A computer program may be stored on a computer-readable medium, itself an embodiment of the disclosure. A "computer-readable medium" is any suitable mechanism or format that can store a program for later processing by at least one processor. The computer readable medium can be, for example but not limited to, an electronic, magnetic, optical, electromagnetic, infrared, or semiconductor system, apparatus or device. The computer-readable medium is preferably non-transitory.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing embodiments of the disclosure, from a study of the drawings, the disclosure and the appended claims. In the claims, the word "comprising" does not exclude other elements or acts, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable non-transitory medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

All references cited herein are incorporated herein in their entireties. If there is a conflict between definitions herein and in an incorporated reference, the definition herein shall control.

## Claims

**1.** An agricultural system (100) comprising:
a container (110) having an interior volume (111) for carrying pourable agricultural material (190), the container having one or more outlets (115, 115A, 115B, 115C) through which the pourable agricultural material is able to flow out of the container, wherein any exposed interior surface (116, 117) of the container and an exposed surface (191) of the pourable agricultural material together define a combined exposed surface;
a distance determining system (120) configured to determine, for each of a plurality of points (121, 122, 123, 124, 125) on the combined exposed surface, a distance between the distance determining system and said point;
a flow rate monitoring system (130) configured to monitor a flow rate of the pourable agricultural material in each of one or more first sub-volumes (131, 132, 133, 134, 135) of the interior volume of the container; and
a runout time prediction system (140) configured to process each determined distance and each determined flow rate to predict a runout time for each of one or more second sub-volumes (141, 142, 143) of the interior volume,
wherein a runout time is a length of time until a flow rate of the pourable agricultural material through the second sub-volume reaches or falls below a predetermined flow rate; and
wherein a positional relationship between each of the plurality of points, each first sub-volume and each second sub-volume is known.

**2.** The agricultural system of claim 1, wherein the one or more second sub-volumes of the pourable agricultural material comprises, for each outlet of the container, an outlet sub-volume bound by the outlet for the container.

**3.** The agricultural system of claim 2, wherein, for each outlet sub-volume, a flow rate of the pourable agricultural material through said outlet sub-volume is a flow rate of pourable agricultural material out of the outlet bounding said outlet sub-volume.

**3.** The agricultural system of any one of claims 1 to 3, wherein each of the plurality of points on the combined exposed surface lies in a different direction from the distance determining system.

**5.** The agricultural system of any one of claims 1 to 4, wherein the distance determining system comprises a time of flight sensor.

**6.** The agricultural system of claim 5, wherein the time of flight sensor is an indirect time of flight sensor.

**7.** The agricultural system of any one of claims 1 to 6, wherein the runout time prediction system is configured to:
receive shape information defining a shape of the interior volume of the container; and
process the shape information, each determined distance and each determined flow rate to predict the runout time for each of the one or more second sub-volumes.

**8.** The agricultural system of claim 7, wherein the runout time prediction system is configured to:
process the shape information and each determined distance to predict a shape of the pourable agricultural material; and
process the predicted shape of the pourable agricultural material and each determined flow rate to predict the runout time for each of the one or more second sub-volumes.

**9.** The agricultural system of claim 8, wherein the pourable agricultural material comprises a plurality of distinct and separable solid elements and the runout time prediction system is configured to use a granular dynamics technique to process the predicted shape of the pourable agricultural material and each determined flow rate to predict the runout time for each of the one or more sub-volumes.

**10.** The agricultural system of any one of claims 1 to 10, wherein the flow rate monitoring system is configured to process the distances determined by the distance determining system over time to monitor the flow rate of the pourable agricultural material through each sub-volume of the interior volume of the container.

**11.** The agricultural system of any one of claims 1 to 10, wherein the one or more outlets comprises a plurality of outlets.

**12.** The agricultural system of any one of claims 1 to 11, wherein the pourable agricultural material comprises a plurality of distinct and separable solid elements.

**13.** The agricultural system of claim 12, wherein the pourable agricultural material comprises seed or grain.

**14.** The agricultural system of any one of claims 1 to 13, wherein the value of the predetermined flow rate is 0.

**15.** A method comprising:
carrying pourable agricultural material in a container having an interior volume, the container having one or more outlets through which the pourable agricultural material is able to flow out of the container, wherein an exposed interior surface of the container and an exposed surface of the pourable agricultural material together define a combined exposed surface;
determining using a distance determining system, for each of a plurality of points on the combined exposed surface, a distance between the distance determining system and said point;
monitoring, using a flow rate monitoring system, flow rate of the pourable agricultural material in each of one or more first sub-volumes of the interior volume of the container; and
processing, using a runout time prediction system, each determined distance and each determined flow rate to predict a runout time for each of one or more second sub-volumes of the interior volume,
wherein a runout time is a length of time until a flow rate of the pourable agricultural material through the second sub-volume reaches or falls below a predetermined flow rate, and
wherein a positional relationship between each of the plurality of points, each first sub-volume and each second sub-volume is known.
